# EUROPÄISCHE PATENTSCHRIFT

(11) **EP 2 858 910 B1**
(45) Veröffentlichungstag und Bekanntmachung des Hinweises auf die Patenterteilung: **26.12.2018**
(21) Anmeldenummer: 13715988.5
(22) Anmeldetag: 12.04.2013
(51) Int. Cl.: B65C 3/20, B65B 3/28, G01G 15/00

(54) **VORRICHTUNG ZUM TRANSPORT UND ZUR MASSEBESTIMMUNG VON OBJEKTEN**
DEVICE FOR TRANSPORTING AND FOR DETERMINING THE MASS OF OBJECTS
DISPOSITIF DE TRANSPORT ET DE DÉTERMINATION DE LA MASSE D'OBJETS

(30) Priorität: 11.06.2012 DE 102012209714
(43) Veröffentlichungstag der Anmeldung: 15.04.2015
(73) Patentinhaber: Robert Bosch GmbH, 70442 Stuttgart (DE)
(72) Erfinder: BLUMENSTOCK, Klaus, 74589 Satteldorf (DE); SIMON, Michael, 74564 Crailsheim (DE)
(86) Internationale Anmeldenummer: PCT/EP2013/057707
(87) Internationale Veröffentlichungsnummer: WO 2013/185944

(56) Entgegenhaltungen:
- EP-A1- 1 972 907
- WO-A1-2011/110925
- DE-B3- 10 300 626
- US-A1- 2012 043 181

## Beschreibung

### Stand der Technik

Die vorliegende Erfindung betrifft eine Vorrichtung zum Transport und zur Massebestimmung von Objekten. Insbesondere betrifft die vorliegende Erfindung eine Vorrichtung, in welcher mit medizinischen Flüssigkeiten gefüllte Behälter als Objekte transportiert und zur Massebestimmung in eine Wägevorrichtung eingesetzt werden.

Gattungsgemäße Vorrichtungen bzw. Anlagen sind im Stand der Technik bekannt.

EP 1 972 907 A1 zeigt eine Plattform für eine Waage, in welcher mehrere zu wägende Objekte angeordnet und mittels welcher sie transportiert werden können. Die Plattform ist dabei in der Art ausgestaltet, dass beim Absenken der Plattform eine hervorstehende Struktur einer Waage durch einen die Objekte halternden Bereich ragen und somit eine Massebestimmung der Objekte durchführbar ist.

Die US 2012/043181 A1 zeigt eine Vorrichtung zum Wiegen von Behältern, welche in einer Fördereinrichtung angeordnet werden können. In einer Objektaufnahme angeordnete Ausnehmungen sind eingerichtet, mit Strukturen einer Waage zu korrespondieren, um die Objekte zur Massebestimmung auf der Waage anordnen zu können.

Die DE 103 00 626 B3 offenbart eine Vorrichtung zum schnellen Beschicken einer Waage, bei welcher ein Greifer mindestens zwei Wägegutträger aufweist, die so ausgebildet sind, dass sie jeweils einzeln das auf ihnen befindliche Wägegut auf die Waage setzen bzw. von der Waage abheben kann.

WO 2011/110925 A1 offenbart eine Transportvorrichtung, mittels welcher Objekte entlang einer durch unterschiedliche geformte Schienenabschnitte geführte Trajektorien abfahren können. Hierzu werden die Objekte auf einem Wagen angeordnet, welcher auf einem Transportband aufsitzt.

Zu füllende Objekte oder Gefäße werden einer Füllanlage zugeführt, in welcher sie mit einer vordefinierten Flüssigkeitsmenge gefüllt werden. Anschließend ist ein Verifikationsvorgang beispielsweise in Form eines Wägevorgangs durchzuführen, um die tatsächliche Füllmenge der Objekte zu ermitteln. Um die häufig als Vials, Ampullen oder Spritzen ausgeführten Objekte gegen ein gegenseitiges Berühren zu schützen, sind diese in separaten Kavitäten einer Haltevorrichtung bzw. einem Halter angeordnet, wobei der Halter zum Handhaben und zum Transport der Objekte durch die Vorrichtung bzw. die umliegende Anlage eingerichtet ist. Im Zuge eines Wägevorgang müssen die Objekte entweder aus dem Halter herausgenommen werden oder der Halter nach unten offenen ausgestaltet sein, um die Objekte nach unten aus dem Halter hervorstehen zu lassen, damit die Objekte auf der Wägevorrichtung anordenbar sind. Ein Herausnehmen der Objekte aus dem Halter ist mit einem zusätzlichen Arbeitsschritt verbunden, welcher aufgrund der mitunter empfindlichen Behälter gegebenenfalls eine sensible Greifsensorik erforderlich macht. Wird der Halter mit einer offenen Unterseite ausgestaltet, müssen die Behälter entweder durch eine feststehende Unterlage gegen ein Herausfallen aus dem sich bewegenden Halter gesichert werden oder aber auch die Unterlage muss mit dem Halter bewegt werden. Während eine sich mitbewegende Unterlage einen zusätzlichen Aufwand bedeutet, welchen es ebenfalls zu vermeiden gilt, bringt eine offene Unterseite des Halters gleich mehrere Nachteile mit sich. Da die Objekte auf der feststehenden Unterlage während des Transportes schleifen, kann in Abhängigkeit der gewählten Materialkombination eine elektrostatische Aufladung der Objekte erfolgen oder abgeriebene Partikel der feststehenden Unterlage an dem Objekt haften bleiben. Letzteres ist insbesondere aus hygienischen Gründen in Verbindung mit medizinischen Flüssigkeiten problematisch. Zudem kann der Transport zu Beschädigungen und optischen Makel an den Objekten (z.B. Kratzern) führen und Ergebnisse einer Massebestimmung verfälschen. Es ist daher eine Aufgabe der vorliegenden Erfindung, die aus dem Stand der Technik bekannten und vorgenannten Probleme zu beheben.

### Offenbarung der Erfindung

Die zuvor genannte Aufgabe wird durch eine Vorrichtung mit den Merkmalen gemäß Anspruch 1 gelöst. Entsprechend wird eine Vorrichtung zum Transport und zur Massebestimmung von Objekten zur Verfügung gestellt. Die Vorrichtung umfasst eine Wägevorrichtung zum Wägen der Objekte. Insbesondere können die Objekte als Behälter für medizinische Flüssigkeiten oder für andere Inhalte ausgestaltet sein. Des Weiteren umfasst die erfindungsgemäße Vorrichtung eine Transporteinheit zum Handhaben während des Transports der Objekte durch die Vorrichtung. Mit anderen Worten ist die Transporteinheit zur Aufnahme der Objekte und Förderung derselben durch die erfindungsgemäße Vorrichtung vorgesehen. Hierzu weist die Transporteinheit einen Halter zum Haltern mindestens eines Objektes auf, wobei mehrere Kavitäten oder Positionen zum Haltern mehrerer Objekte in einer Transporteinheit vorgesehen sein können. Der Halter weist einen Tragbereich zum Tragen des Objektes von dessen Unterseite auf, so dass der Tragbereich unterhalb eines in der Transporteinheit angeordneten Objektes angeordnet ist. Der Tragbereich weist erfindungsgemäß mindestens eine Öffnung auf, welche mit einer Wägevorrichtung der Vorrichtung derart korrespondiert, dass ein in dem Halter angeordnetes Objekt über die Öffnung bzw. die Öffnungen auf der Wägevorrichtung zur Massebestimmung angeordnet werden kann. Zum Anordnen des Objektes auf der Wägevorrichtung kann der Halter, insbesondere samt der Transporteinheit, eingerichtet sein, gegenüber der Wägevorrichtung abgesenkt zu werden. Mit anderen Worten greift die Wägevorrichtung über die Öffnungen im Tragbereich des Halters auf ein Objekt zu, welches bis zu diesem Zeitpunkt ausschließlich im Halter angeordnet war.

Die Vorrichtung umfasst weiter eine Transportvorrichtung, welche eine Führungseinheit aufweist. Die Führungseinheit ist eingerichtet, die Absenkung der Transporteinheit im Bereich der Wägevorrichtung dadurch zu ermöglichen, dass die Führungseinheit im Bereich der Wägevorrichtung gegenüber benachbarten Abschnitten der Führungseinheit im Wesentlichen senkrecht zur Transportrichtung bewegt wird. Mit anderen Worten hat die Führungseinheit, welche beim Transport insbesondere für ein Tragen der Transporteinheit vorgesehen ist, im Bereich der Wägevorrichtung einen gegenüber anderen Abschnitten der Führungseinheit beweglichen Abschnitt aufzuweisen. Dieser freie Abschnitt kann beispielsweise mittels eines Antriebs gegenüber den übrigen Bereichen abgesenkt werden, um das Objekt in einem Halter der auf der Führungseinheit angeordneten Transporteinheit auf die Wägevorrichtung zu setzen. Auf diese Weise vereinfacht sich der Aufbau der Transporteinheit, da diese im Ganzen und mitsamt der Sektion der Führungseinheit, welche im Bereich der Wägevorrichtung angeordnet ist, abgesenkt werden kann.
Die Unteransprüche zeigen bevorzugte Weiterbildungen der Erfindung.
Weiter bevorzugt kann die Vorrichtung eine Vortriebseinheit zum Fortbewegen bzw. Antreiben der Transporteinheit aufweisen, wobei die Vortriebseinheit über einen Formschluss sowohl in Transportrichtung als auch entgegen der Transportrichtung mit der Transporteinheit gekoppelt sein kann. Hierzu kann die Transporteinheit beispielsweise eine vertikale Struktur aufweisen, welche über den Formschluss mittels eines in Transportrichtung vor und eines in Transportrichtung hinter der vertikalen Struktur angeordneten und mit der Vortriebseinheit verbundenen Mitnehmers bewegt werden kann. Somit kann der Mitnehmer ein sicheres Mitnehmen der Transporteinheit gewährleisten, steht jedoch einem Absenken der Transporteinheit gegenüber dem Mitnehmer nicht entgegen.

Weiter bevorzugt kann die Wägevorrichtung eine zu der Öffnung im Tragbereich korrespondierende Struktur aufweisen. Mit anderen Worten kann die Wägevorrichtung eine Struktur aufweisen, welche ein Objekt sicher aufnehmen kann, wobei im Halter und insbesondere in dessen Tragbereich Öffnungen vorgesehen sind, welche die vorgenannte Struktur der Wägevorrichtung passieren lassen können. Insbesondere kann der Halter so ausgestaltet sein, dass die Objekte in einer schrägen Aufwärtsbewegung aus der Halteposition herausgehoben werden können, wobei die Wägevorrichtung auch einen Seitenhalt der Objekte übernehmen kann. Dies bietet den Vorteil, dass in die Wägevorrichtung eingebrachte Objekte nicht ausschließlich von deren Unterseite getragen werden, sondern auch seitlich gegen ein Herausfallen aus der Wägevorrichtung gesichert sein können.

Weiter bevorzugt kann die Vorrichtung eine Schiene als Führungseinheit aufweisen, wobei die Schiene bevorzugt eine Prismenschiene ist. Unter einer Prismenschiene sei im Rahmen der vorliegenden Erfindung eine Schiene verstanden, welche an gegenüberliegenden Enden jeweils entgegengesetzt orientierte, pfeilspitzenförmig zulaufende Querschnittsstrukturen aufweist. Diese Querschnittsstrukturen können durch korrespondierende Querschnittsstrukturen in einem Rollenpaar, welches an der Transporteinheit vorgesehen ist, in Eingriff stehen, so dass die Transporteinheit gegen ein Kippen von der Führungseinheit gesichert ist. Das vorgenannte Konzept bietet eine einfache, kompakte und sichere Stabilisierung der Transporteinheit auf der Führungseinheit der Transportvorrichtung.

Weiter bevorzugt kann die Transportvorrichtung einen Riementrieb als Vortriebseinheit aufweisen, welcher insbesondere einen Mitnehmer aufweist. Der Mitnehmer kann mit der Transporteinheit während des Transports einen bereits zuvor beschriebenen Formschluss eingehen, über welchen die Vortriebseinheit bzw. der Riementrieb während des Transports mit der Transporteinheit in Eingriff steht, während des Absenkens der Transporteinheit im Bereich der Wägevorrichtung jedoch den Formschluss auflösen bzw. verlassen kann. Dies bietet den Vorteil, dass die Vortriebseinheit und die Führungseinheit der Transportvorrichtung unabhängig voneinander an der Transporteinheit angreifen, die Vortriebseinheit im Bereich der Wägevorrichtung also nicht abgesenkt werden muss, wodurch sich ein Absenken der Transporteinheit und der Führungseinheit im Bereich der Wägevorrichtung besonders einfach gestaltet.

Weiter bevorzugt kann die Transporteinheit eingerichtet sein, während des Transports das im Halter befindliche Objekt im Zusammenwirken mit einer Leiteinrichtung der Transportvorrichtung horizontal zu sichern. Mit anderen Worten kann der Halter der Transporteinheit seitlich offen gestaltet sein, wobei während des Transports eine, insbesondere feststehende, Leiteinrichtung ein Herausfallen der Objekte aus der Transporteinheit verhindert. Die Leiteinrichtung kann dabei beispielsweise als Teflonband mit besonders niedrigem Reibwert gegenüber aus Glas gefertigten Ampullen oder Vials ausgestaltet sein. Auch die Leiteinrichtung kann unterschiedliche Abschnitte aufweisen, wobei ein im Bereich der Wägevorrichtung angeordneter Abschnitt so ausgestaltet sein kann, dass er den Wägevorgang nicht negativ beeinflusst. Beispielsweise kann die Leiteinrichtung einen beweglichen Abschnitt im Bereich der Wägevorrichtung aufweisen, welcher beim Einbringen der Objekte in die Wägevorrichtung das in der Transporteinheit bzw. auf der Wägevorrichtung angeordnete Objekt freigibt. Alternativ oder zusätzlich kann die Leiteinrichtung insbesondere im Bereich der Wägevorrichtung so angeordnet sein, dass sie lediglich ein Kippen oder Rutschen der Objekte aus den Haltern der Transporteinheit verhindert, ohne die Objekte bei einer normalen Positionierung in den Haltern zu berühren. Dies bietet den Vorteil, dass die Halter der Transporteinheiten seitlich offen gestaltet werden können, um ein Einbringen der Objekte in die Wägevorrichtung unkompliziert zu gestalten, ohne dass ein Herausfallen der Objekte aus den Haltern riskiert werden müsste.

Weiter bevorzugt kann die Öffnung im Tragbereich der Halter zwei Schlitze umfassen, welche zumindest teilweise auch in einem Seitenbereich des Halters vorgesehen sind. Mit anderen Worten ziehen sich die Schlitze durch den Tragbereich und zumindest einen unteren, das Objekt zumindest teilweise umschließenden, Seitenbereich kontinuierlich hindurch, wodurch eine mit diesen Schlitzen korrespondierende Struktur in der Wägevorrichtung ebenfalls ein seitliches Stützen des Objektes in der Wägevorrichtung gewährleisten kann, während die mit den Schlitzen korrespondierende Struktur der Wägevorrichtung durch die Schlitze im Halter hindurchragt bzw. mit diesen "kämmt". Auf diese Weise sind auch in der Wägevorrichtung angeordnete Objekte gegen ein seitliches Herausfallen und Beschädigungen geschützt. Dennoch ist eine erfindungsgemäße Übergabe des Objektes zwischen dem Halter der Transporteinheit und der Wägevorrichtung durch ein Absenken der Transporteinheit möglich. Ein Absenken im Sinne der vorliegenden Erfindung kann dabei selbstverständlich und bevorzugt eine relative Seitwärtsbewegung zwischen Transporteinheit und Wägevorrichtung umfassen. Insbesondere bei hohen, schmalen Objekten kann somit durch eine kurze Bewegung ein relativ großer Abstand zwischen dem Objekt und dem Halter hergestellt werden, wodurch das Wägeergebnis mit Sicherheit nicht verfälscht wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine perspektivische Darstellung eines Ausführungsbeispiels einer erfindungsgemäßen Vorrichtung im Bereich einer Wägevorrichtung;
- Figur 2: eine Detailansicht eines Ausführungsbeispiels der vorliegenden Erfindung, in welcher ein Objekt in einem Halter einer Transporteinheit über einer Wägevorrichtung angeordnet ist;
- Figur 3: eine perspektivische Darstellung eines Abschnittes eines Ausführungsbeispiels der erfindungsgemäßen Vorrichtung mit Linearantrieben für die Absenkung der Führungseinheit im Bereich der Wägevorrichtung;
- Figur 4: eine Seitenansicht eines Ausführungsbeispiels der erfindungsgemäßen Vorrichtung beim Durchtransport;
- Figur 5: eine Seitenansicht eines Ausführungsbeispiels der erfindungsgemäßen Vorrichtung beim Herstellen des Kontaktes zwischen dem Objekt und der Wägevorrichtung;
- Figur 6: eine Seitenansicht eines Ausführungsbeispiels der erfindungsgemäßen Vorrichtung nach dem Absetzen des Objektes auf der Wägevorrichtung;
- Figur 7: eine Draufsicht auf ein Ausführungsbeispiel für eine Führungseinheit im Bereich einer Wägevorrichtung; und
- Figur 8: eine perspektivische Ansicht einer Transportvorrichtung mit einer Vielzahl von in der Transportvorrichtung geförderten Transporteinheiten.

### Ausführungsformen der Erfindung

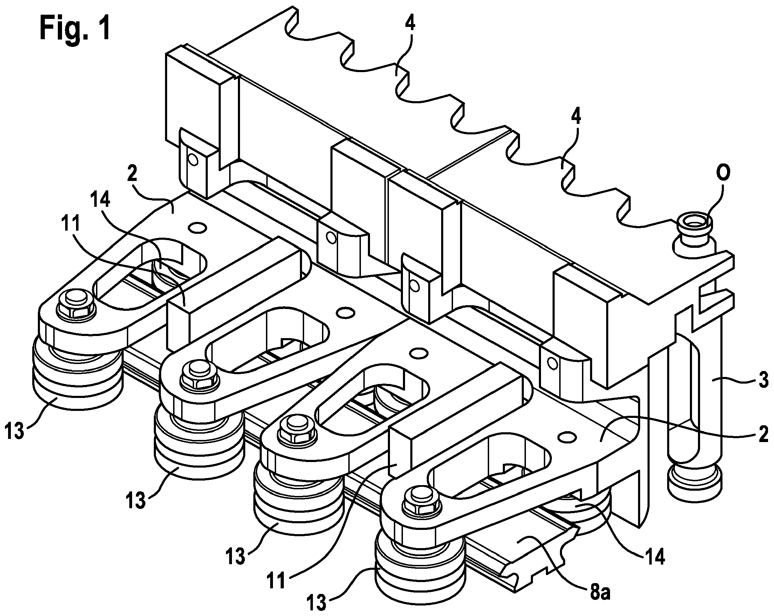

In Figur 1 ist eine senkrecht zur Transportrichtung bewegliche Sektion einer Führungsschiene 8a dargestellt, welche als sogenannte Prismenschiene ausgestaltet ist. Zwei an einander gegenüberliegenden Seiten der Prismenschiene angeordnete pfeilförmige Querschnittsabschnitte stehen dabei in Eingriff mit aus zwei Rollen 13, 14 bestehenden Rollenpaaren. Jede Transporteinheit 2 weist hierbei zwei Rollenpaare 13, 14 auf, zwischen welchen eine quaderförmige Struktur 11 zum beidseitigen Umfassen durch einen Mitnehmer (in Fig. 1 nicht dargestellt) vorgesehen ist. Die rechte der beiden dargestellten Transporteinheiten 2 hat ein Vial O, also einen Behälter für medizinische Flüssigkeiten, als Objekt O in einem Halter 4 angeordnet. Das Vial O ist über einem Wägetisch einer Wage als Wägevorrichtung 3 angeordnet. Die drei übrigen Objektaufnahmen des Halters 4 sind im Beispiel zum Zwecke der Übersichtlichkeit nicht durch Vials belegt. Zudem ist lediglich eine Wägevorrichtung 3 dargestellt. Selbstverständlich bietet es sich jedoch an, sämtliche Objektpositionen innerhalb eines Halters 4 mit entsprechenden Wägevorrichtungen korrespondieren zu lassen. Anders ausgedrückt, kann eine Vielzahl von Wägevorrichtungen vorgesehen sein, welche mit sämtlichen in den zeitgleich absenkbaren Haltern 4 vorgesehenen Objektpositionen korrespondieren.

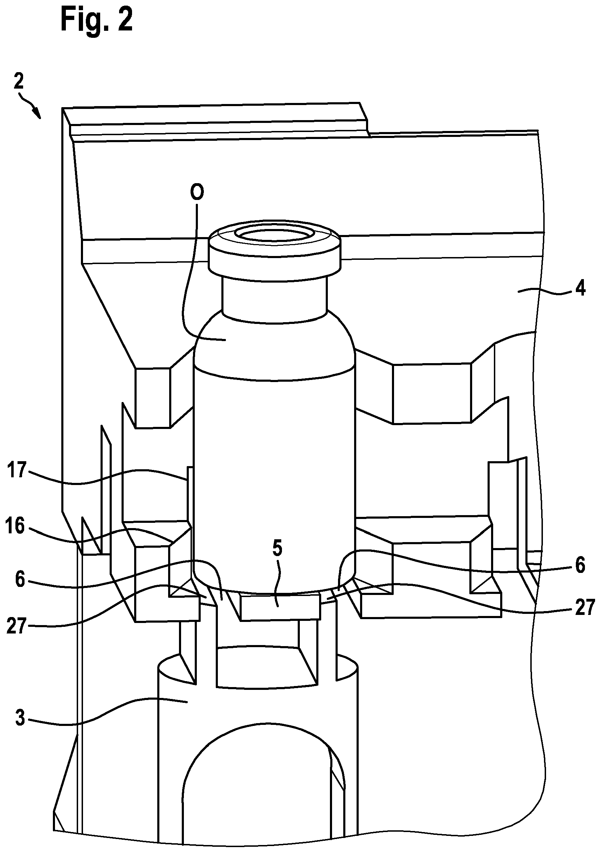

Figur 2 zeigt die in Figur 1 dargestellte Position des Vials O in einer vergrößerten und gedrehten Ansicht. Das Vial O ist in einer Objektposition eines Halters 4 angeordnet, wobei die Objektposition in Richtung des Betrachters (beim Durchtransport korrespondierend mit der Richtung der Wägevorrichtung 3) offen ist. Mit anderen Worten umschließt die Objektposition des Halters 4 lediglich einen Teil des Objektumfangs. Der Tragbereich 5 des Halters 4 ist mit zwei parallelen Schlitzen 6 als Öffnungen versehen, welche sich bis in etwa auf ein Drittel der Höhe der Seitenwand im Halter 4 erstrecken. Mit den parallelen Schlitzen 6 in der Seitenwand korrespondiert eine im Wesentlichen vertikale Struktur 17, welche an ihrem unteren Ende in eine horizontale Struktur 27 übergeht. Während der horizontale Bereich der Struktur 27 eingerichtet ist, das Vial O aus dem Halter 4 herauszuheben, ist der vertikale Bereich der Struktur 17 eingerichtet, dem Vial O nach dem Herausheben Seitenhalt zu geben.

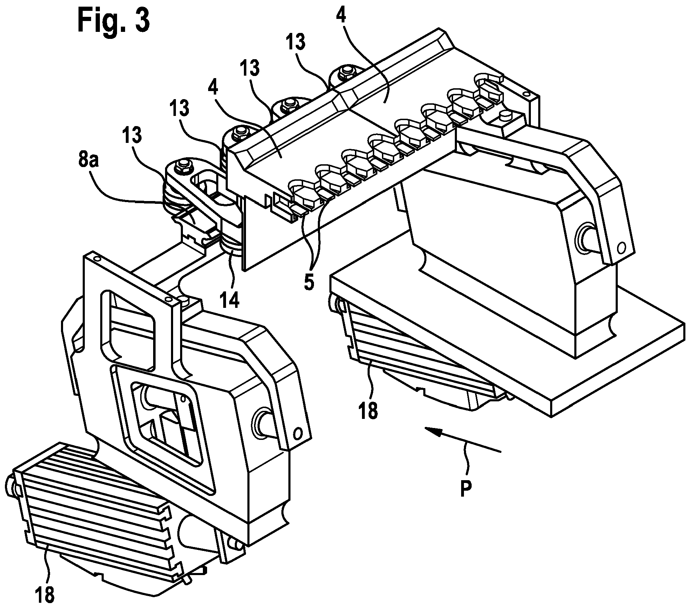

Figur 3 zeigt im Wesentlichen den in Verbindung mit Figur 1 diskutierten Abschnitt der erfindungsgemäßen Vorrichtung 1, wobei Antriebe 18 für eine Absenkung der Führungseinheit 8a in Richtung des Pfeils P vorgesehen sind. Im dargestellten Ausführungsbeispiel entspricht die Richtung des Pfeils P gegenüber der Waagerechten einem Winkel von 15°. Die Antriebe 18 sind dabei als Linearantriebe ausgeführt, wodurch der dargestellte Abschnitt 8a der Führungsschiene 8 gegenüber übrigen (nicht dargestellten) Abschnitten 8b der Führungsschiene 8 im Wesentlichen senkrecht zur Transportrichtung abgesenkt werden kann. Im Zuge dieser Bewegung werden (in Figur 3 nicht dargestellte) Vials O als Objekte ebenfalls abgesenkt und werden so in einer (nicht in Figur 3 dargestellten) Wägevorrichtung 3 angeordnet.

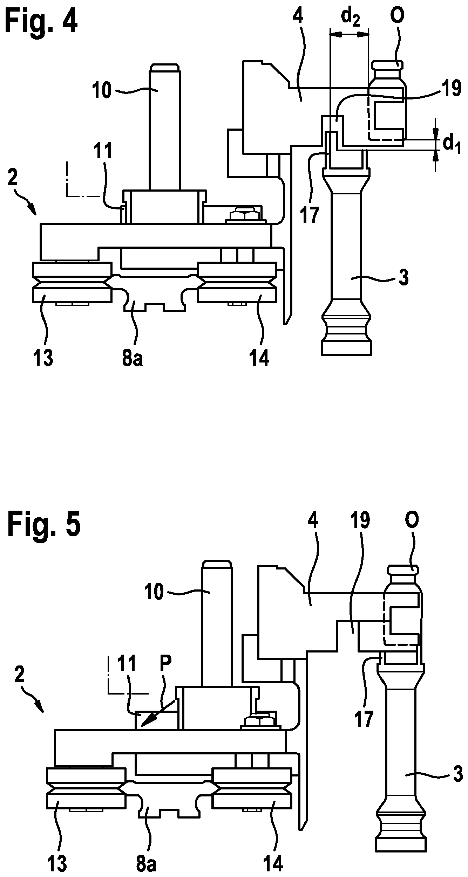

Figur 4 zeigt eine Seitenansicht eines senkrecht zur Transportrichtung teilweise geschnittenen Ausführungsbeispiels der vorliegenden Erfindung im Bereich einer Wägevorrichtung 3. Erkennbar weist der Halter 4 eine in Transportrichtung durchgehende Ausnehmung 19 auf, welche mit der vertikalen Struktur 17 auf der Wägevorrichtung 3 korrespondiert, so dass die Unterseite des Halters 4 beim Durchtransport der Vials O niedriger angeordnet sein kann, als die Oberkante der vertikalen Struktur 17 der Wägevorrichtung 3. Zwischen der Unterseite des Vials O und der Wägevorrichtung 3 besteht beim Durchtransport ein erster Abstand d₁, während zwischen der vertikalen Struktur 17 und dem Vial O ein horizontaler Abstand b₂ besteht. Des Weiteren ist ein Mitnehmer 10 über der Führungseinheit 8a angeordnet, welcher fest und unverschieblich mit einer (in Figur 4 nicht dargestellten) Vortriebseinheit 9 verbunden ist. In seinem unteren Bereich steht der Mitnehmer 10 in formschlüssigem Eingriff mit einer Struktur 11 der Transporteinheit 2.

Figur 5 zeigt die in Figur 4 dargestellte Anordnung, nachdem der dargestellte Abschnitt 8a der Führungseinheit 8 mitsamt der darauf angeordneten Transporteinheit 2 gegenüber dem Mitnehmer 10 und der Wägevorrichtung 3 abgesenkt und nach links bewegt worden ist (siehe Pfeil P). Auf diese Weise steht das Vial O im Halter 4 in Kontakt mit der Wägevorrichtung 3. Die Mantelfläche des Vials O steht zudem in Kontakt mit der vertikalen Struktur 17 der Wägevorrichtung 3.

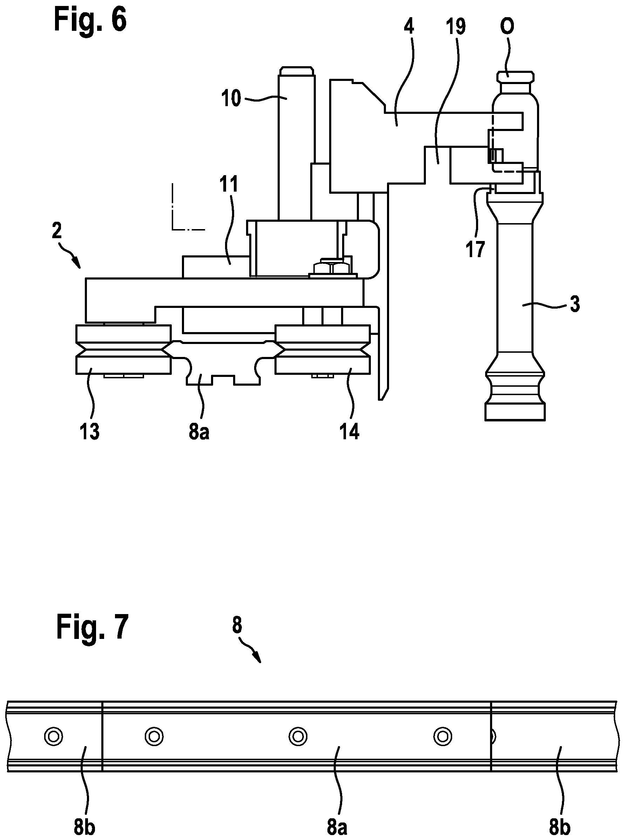

Figur 6 zeigt die in Figur 5 dargestellte Anordnung, nachdem die dargestellte Führungseinheit 8a und die Transporteinheit 2 weiter abgesenkt worden ist. Das Vial O steht nun alleinig auf der Wägevorrichtung 3, deren horizontale Struktur 27 und vertikale Struktur 17 das Vial O unabhängig vom Halter 4 hält. Auf diese Weise kann vermieden werden, dass das Wägeergebnis durch einen Kontakt mit dem Halter 4 verfälscht wird.

Figur 7 zeigt einen Abschnitt 8a der Führungseinheit 8, welcher zwischen zwei feststehenden Abschnitten 8b der Führungseinheit 8 angeordnet ist. Erkennbar bestehen die Abschnitte 8a und 8b der Führungseinheit 8 aus identischen Profilteilen, welche zueinander fluchtend angeordnet werden können, um eine Transporteinheit 2 (in Figur 7 nicht dargestellt) von einem Abschnitt 8b auf den Abschnitt 8a der Führungseinheit 8 fahren zu können und anschließend auf einen anliegenden Abschnitt 8b der Führungseinheit 8 abtransportieren zu können.

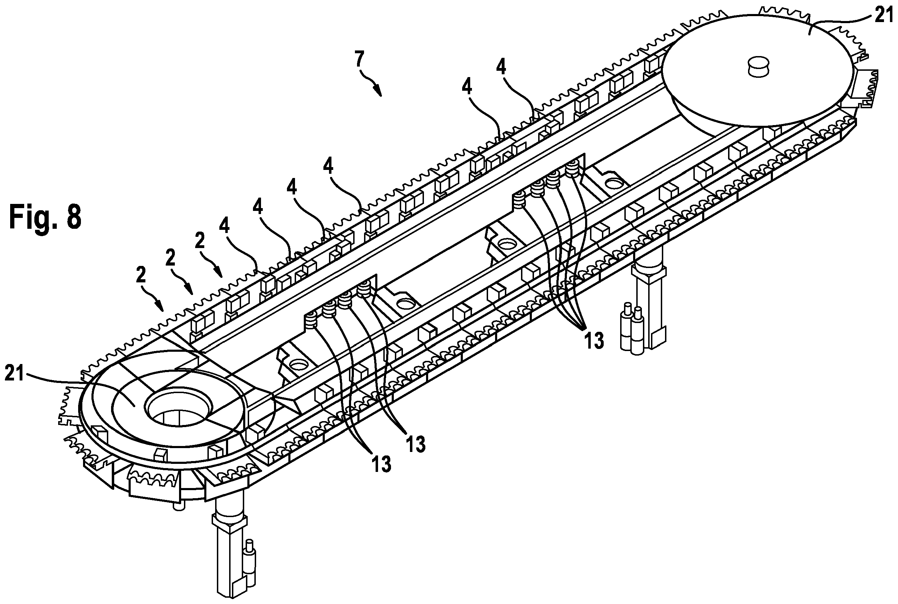

Figur 8 zeigt eine perspektivische Darstellung auf eine Transportvorrichtung 7, in welcher eine Vielzahl von Transporteinheiten 2 angeordnet ist. Im Bereich zweier (in Figur 8 nicht dargestellter) Wägestationen 3 sind vier Transporteinheiten 2 gegenüber den umliegenden Transporteinheiten 2 abgesenkt (erkennbar an den jeweils zwei abgesenkten Haltern 4 im Bereich der Rollen 13). Die Transporteinheiten 2 sind auf Stoß aneinander angeordnet, wobei mit anderen Worten keine wesentlichen Abstände zwischen zwei benachbarten Transporteinheiten 2 bestehen. Lediglich im Bereich zweier Umlenkeinheiten 21 sind sich in radialer Richtung vergrößernde Abstände zwischen benachbarten Transporteinheiten 2 erkennbar.
Es ist ein Kerngedanke der vorliegenden Erfindung, einen tragenden Transport von Objekten durch eine Vorrichtung zum Transport und zur Massebestimmung derselben Objekte zu ermöglichen, indem die Objekte in einem Halter angeordnet werden, welcher in seinem Tragbereich einen freien Querschnitt aufweist, welcher durch eine korrespondierende Struktur der Wägevorrichtung durchragt werden kann, wenn der Halter gegenüber der Wägevorrichtung abgesenkt wird. Erfindungsgemäß kann dabei eine den Halter aufweisende Transporteinheit dadurch abgesenkt werden, dass ein Bereich der Transportvorrichtung (insbesondere umfassend eine Führungseinheit) gegenüber der Wägevorrichtung abgesenkt wird. Insbesondere kann die Wägevorrichtung einen horizontalen Strukturbereich zum Tragen einer Objektunterseite beim Wägevorgang aufweisen, wobei der horizontale Strukturbereich in einen vertikalen, das Objekt seitlich stabilisierenden Stützbereich übergeht.

## Patentansprüche

1. Vorrichtung zum Transport und zur Massebestimmung von Objekten (O) umfassend
- eine Wägevorrichtung (3) zum Wägen der Objekte (O),
- eine Transporteinheit (2) zum Handhaben der Objekte (O) während des Transports,
wobei die Transporteinheit (2) einen Halter (4) zum Haltern mindestens eines Objekts (O) aufweist, und wobei der Halter (4) einen Tragbereich (5) zum Tragen des Objektes (O) von dessen Unterseite aufweist,
wobei die Wägevorrichtung (3) eingerichtet ist, ein Objekt (O) durch mindestens eine Öffnung (6) im Tragbereich (5) zu wägen, und **dadurch gekennzeichnet, dass** die Vorrichtung eingerichtet ist, den Halter (4) samt der Transporteinheit (2), gegenüber der Wägevorrichtung (3) abzusenken, wobei die Vorrichtung eine Transportvorrichtung (7) mit einer Führungseinheit (8) aufweist, wobei die Führungseinheit (8) eingerichtet ist, die Absenkung der Transporteinheit (2) im Bereich der Wägevorrichtung (3) dadurch zu ermöglichen, dass die Führungseinheit (8a) im Bereich der Wägevorrichtung (3) gegenüber benachbarten Abschnitten der Führungseinheit (8b) im Wesentlichen senkrecht zur Transportrichtung bewegt werden kann.

2. Vorrichtung nach Anspruch 1, wobei weiter eine Vortriebseinheit (9) zum Antreiben der Transporteinheit (2) vorgesehen ist, wobei die Vortriebseinheit (9) über einen Formschluss in Transportrichtung mit der Transporteinheit (2) gekoppelt ist, während der Formschluss die Absenkung der Transporteinheit (2) im Bereich der Wägevorrichtung (3) nicht behindert.

3. Vorrichtung nach einem der vorstehenden Ansprüche, wobei die Wägevorrichtung (3) eine zu der Öffnung im Tragbereich (5) korrespondierende Struktur aufweist.

4. Vorrichtung nach einem der vorstehenden Ansprüche, weiter umfassend eine Schiene, insbesondere eine Prismenschiene, als Führungseinheit (8), wobei die Schiene mit einem an der Transporteinheit (2) vorgesehenen Rollenpaar, dessen Rollen (13, 14) an gegenüberliegenden Seiten der Schiene angeordnet sind, in Eingriff steht.

5. Vorrichtung nach einem der vorstehenden Ansprüche, weiter aufweisend einen Riementrieb als Vortriebseinheit (9), welcher insbesondere einen Mitnehmer (10) aufweist, der einen Formschluss mit der Transporteinheit (2) herstellt.

6. Vorrichtung nach Anspruch 5, wobei der Mitnehmer (10) eine Struktur (11) der Transporteinheit (2) senkrecht zur Transportrichtung vor und hinter der Struktur (11) hinterschneidet.

7. Vorrichtung nach einem der vorstehenden Ansprüche, wobei die Transporteinheit (2) eingerichtet ist, das Objekt (O) im Zusammenwirken mit einer Leiteinrichtung (12) der Transportvorrichtung (7) horizontal zu sichern.

8. Vorrichtung nach einem der vorstehenden Ansprüche, wobei die Öffnung (6) zwei Schlitze umfasst, welche im Tragbereich (5) und in einem das Objekt (O) zumindest teilweise umschließenden Seitenbereich (16) des Halters (4) vorgesehen und insbesondere im Wesentlichen parallel zueinander angeordnet sind.

9. Vorrichtung nach Anspruch 8, wobei die Wägevorrichtung (3) eine zu den Schlitzen (6) im Seitenbereich (16) korrespondierende vertikale Struktur (17) zum seitlichen Stützen des Objektes (O) aufweist.

## Claims

1. Apparatus for transporting objects (O) and for determining the mass thereof, comprising
- a weighing apparatus (3) for weighing the objects (O),
- a transporting unit (2) for handling the objects (O) while they are being transported,
wherein the transporting unit (2) has a holder (4) for retaining at least one object (O), and wherein the holder (4) has a carrying region (5) for carrying the object (O) from the underside thereof,
wherein the weighing apparatus (3) is intended to weigh an object (O) through at least one opening (6) in the carrying region (5),
**characterized in that** the apparatus is intended to lower the holder (4) together with the transporting unit (2) in relation to the weighing apparatus (3),
wherein the apparatus has a transporting apparatus (7) with a guide unit (8), wherein the guide unit (8) is intended to provide for the lowering operation of the transporting unit (2) in the region of the weighing apparatus (3) **in that**, in the region of the weighing apparatus (3), the guide unit (8a) can be moved in relation to adjacent portions of the guide unit (8b) essentially perpendicularly to the transporting direction.

2. Apparatus according to Claim 1, wherein an advancement unit (9) for driving the transporting unit (2) is also provided, wherein the advancement unit (9) is coupled to the transporting unit (2) via a form fit in the transporting direction, and the form fit does not obstruct the lowering operation of the transporting unit (2) in the region of the weighing apparatus (3).

3. Apparatus according to either of the preceding claims, wherein the weighing apparatus (3) has a structure corresponding to the opening in the carrying region (5).

4. Apparatus according to one of the preceding claims, also comprising a rail, in particular a prism rail, as guide unit (8), wherein the rail is in engagement with a pair of rollers provided on the transporting unit (2), the rollers (13, 14) being arranged on opposite sides of the rail.

5. Apparatus according to one of the preceding claims, also having a belt drive as advancement unit (9), the belt drive having, in particular, a driver (10) which establishes a form fit with the transporting unit (2).

6. Apparatus according to Claim 5, wherein the driver (10) undercuts a structure (11) of the transporting unit (2), perpendicularly to the transporting direction, upstream and downstream of the structure (11).

7. Apparatus according to one of the preceding claims, wherein the transporting unit (2) is intended to secure the object (O) horizontally in conjunction with a directing device (12) of the transporting apparatus (7).

8. Apparatus according to one of the preceding claims, wherein the opening (6) comprises two slots which are provided in the carrying region (5) and in a side region (16) of the holder (4), said side region at least partially surrounding the object (O), and are arranged in particular essentially parallel to one another.

9. Apparatus according to Claim 8, wherein the weighing apparatus (3) has a vertical structure (17) which corresponds to the slots (6) in the side region (16) and is intended for supporting the object (O) laterally.

## Revendications

1. Dispositif de transport et de détermination de la masse d'objets (O), comprenant :
- un dispositif de pesée (3) pour peser les objets (O),
- une unité de transport (2) pour manipuler les objets (O) pendant le transport,
l'unité de transport (2) présentant un dispositif de retenue (4) pour retenir au moins un objet (O), et le dispositif de retenue (4) présentant une région de support (5) pour supporter l'objet (O) par son côté inférieur,
le dispositif de pesée (3) étant prévu pour peser un objet (O) à travers au moins une ouverture (6) dans la région de support (5), et
**caractérisé en ce que** le dispositif est prévu pour abaisser le dispositif de retenue (4) conjointement avec l'unité de transport (2) par rapport au dispositif de pesée (3), le dispositif présentant un dispositif de transport (7) avec une unité de guidage (8), l'unité de guidage (8) étant prévue pour permettre l'abaissement de l'unité de transport (2) dans la région du dispositif de pesée (3) par le fait que l'unité de guidage (8a) peut être déplacée dans la région du dispositif de pesée (3) par rapport à des portions adjacentes de l'unité de guidage (8b) essentiellement perpendiculairement à la direction de transport.

2. Dispositif selon la revendication 1, dans lequel en outre une unité d'entraînement (9) pour entraîner l'unité de transport (2) est prévue, l'unité d'entraînement (9) étant accouplée par engagement par correspondance de formes dans la direction de transport à l'unité de transport (2), tandis que l'engagement par correspondance de formes n'empêche par l'abaissement de l'unité de transport (2) dans la région du dispositif de pesée (3).

3. Dispositif selon l'une quelconque des revendications précédentes, dans lequel le dispositif de pesée (3) présente une structure correspondant à l'ouverture dans la région support (5) .

4. Dispositif selon l'une quelconque des revendications précédentes, comprenant en outre un rail, en particulier un rail prismatique en tant qu'unité de guidage (8), le rail étant en prise avec une paire de rouleaux prévus sur l'unité de transport (2), dont les rouleaux (13, 14) sont disposés sur des côtés opposés du rail.

5. Dispositif selon l'une quelconque des revendications précédentes, présentant en outre un entraînement à courroie en tant qu'unité d'entraînement (9), qui présente notamment un dispositif d'entraînement (10) qui crée un engagement par correspondance de formes avec l'unité de transport (2).

6. Dispositif selon la revendication 5, dans lequel le dispositif d'entraînement (10) forme une contre-dépouille avec une structure (11) de l'unité de transport (2) perpendiculairement à la direction de transport avant et après la structure (11) .

7. Dispositif selon l'une quelconque des revendications précédentes, dans lequel l'unité de transport (2) est prévue pour fixer l'objet (O) horizontalement par coopération avec un dispositif de guidage (12) du dispositif de transport (7).

8. Dispositif selon l'une quelconque des revendications précédentes, dans lequel l'ouverture (6) comprend deux fentes qui sont prévues dans la région de support (5) et dans une région latérale (16) du dispositif de retenue (4) entourant au moins en partie l'objet (O) et qui sont disposées notamment essentiellement parallèlement l'une à l'autre.

9. Dispositif selon la revendication 8, dans lequel le dispositif de pesée (3) présente une structure verticale (17) correspondant aux fentes (6) dans la région latérale (16), pour le support latéral de l'objet (0) .
